# EUROPÄISCHE PATENTSCHRIFT

(11) **EP 1 253 046 B1**
(45) Veröffentlichungstag und Bekanntmachung des Hinweises auf die Patenterteilung: **25.05.2005**
(21) Anmeldenummer: 02006065.3
(22) Anmeldetag: 18.03.2002
(51) Int. Cl.: B60R 11/02

(54) **Gehäuse**
Case
Boîtier

(30) Priorität: 25.04.2001 DE 10120109
(43) Veröffentlichungstag der Anmeldung: 30.10.2002
(73) Patentinhaber: Harman Becker Automotive Systems GmbH, 76307 Karlsbad (DE)
(72) Erfinder: Mayer, Werner, Dipl.-Ing., 76307 Karlsbad (DE)
(74) Vertreter: Patentanwälte Westphal, Mussgnug & Partner

(56) Entgegenhaltungen:
- EP-A- 0 453 631
- EP-A- 0 963 050
- CH-A- 668 583
- DE-B- 1 221 322

## Beschreibung

Die Erfindung betrifft ein Gehäuse, an dessen rechter und linker Seite je eine aus dem Gehäuse ragende Rastfeder angeordnet ist, die zum Einschieben des Gehäuses in einen Einbaurahmen oder einen Einbauschacht in das Gehäuse versenkbar ist und hinter einer Rastkante des Einbaurahmens oder Einbauschachtes einrastet.

In DE 30 15 259 A1 ist ein Schaltschrank mit einem Einschub beschrieben.

Am Einschub ist ein zweiarmiger Verriegelungshebel drehbar mittels einer Achse befestigt, an dessen vorderem Ende eine Maulöffnung und an dessen hinterem Ende eine Kerbe eingearbeitet ist. Der Verriegelungshebel wird von einer am Einschub befestigten Feder gegen einen am Einschub angeordneten Anschlag gezogen. Am Einschub ist weiter ein Drehschalter mit einem Treibstock vorgesehen, der bei Drehen des Drehschalters in die Maulöffnung des Verriegelungshebels eingreift und den Verriegelungshebel um seine Drehachse dreht. Infolge der Drehung des Verriegelungshebels wird dessen hinteres Ende mit der Kerbe in einen Durchbruch an der Wand des Schaltschrankes geschoben, wobei die am hinteren Ende des Verriegelungshebels eingearbeitete Kerbe in die Wand einrastet.

Autoradios sind z. B. mit Gehäusen, die auf der rechten und der linken Seite je eine aus dem Gehäuse ragende und zum Einschieben in den Einbaurahmen oder den Einbauschacht sowie zum Entriegeln in das Gehäuse versenkbare Rastfeder aufweisen, ausgerüstet.

Aus EP-453 631 A1, DE 92 06 965 U1 und DE 196 14 781 A1 ist ein Autoradio mit einem derartigen Gehäuse bekannt.

Das Gehäuse wird mittels eines speziellen Flachbandschlüssels entriegelt, an dessen einem Ende eine Schräge und eine Raste eingearbeitet sind. Zum Entriegeln wird auf jeder Seite je einer dieser Flachbandschlüssel in einen Schlitz eingeführt, bis eine Nase der Rastfeder an der Schräge aufgleitend in die Raste einrastet. Während des Gleitens der Nase der Rastfeder auf der Schräge des Flachbandschlüssels wird die Rastfeder in das Gehäuse versenkt. Das Autoradio kann nun aus dem Einbaurahmen oder Einbauschacht gezogen werden. Zum Einbau wird das Autoradio in den Einbaurahmen oder Einbauschacht gesteckt, wobei die beiden Rastfedern zunächst in das Gehäuse gedrückt werden und hinter dem Einbaurahmen herausspringen, um das Autoradio zu arretieren.

Bei dem aus DE 196 14 781 A1 bekannten Autoradio lassen sich die Rastfedern mittels der Flachbandschlüssel gegen Rastkanten des Einbauschachtes drücken und arretieren, um einen festen Sitz des Gehäuses im Einbauschacht zu gewährleisten.

Ein Nachteil dieser bekannten Autoradios liegt darin, daß zu deren Ein- und Ausbau spezielle Werkzeuge wie die bekannten Flachbandschlüssel erforderlich sind.

Außerdem sollte das Autoradio nach Einschub in den Einbauschacht fest verriegelt sein, damit es nicht bei einem Unfall, insbesondere einem Aufprall auf das Heck des Kraftfahrzeuges, aus dem Einbauschacht geschleudert werden und wie ein Geschoß Insassen des Kraftfahrzeuges möglicherweise sogar tödlich verletzen kann.

Es ist daher Aufgabe der Erfindung, ein Gehäuse zum Einbau in einen Einbaurahmen oder einen Einbauschacht so zu gestalten, daß das Gehäuse nach Einschub in den Einbauschacht automatisch fest verriegelt ist und daß weder zum Ein- noch zum Ausbau des Gehäuses spezielle Werkzeuge erforderlich sind.

Die Erfindung löst diese Aufgabe mit den im Anspruch 1 angegebenen Merkmalen.

Aus der rechten und linken Seite des Gehäuses ragt je eine Rastfeder, die zum Einschieben des Gehäuses in einen Einbaurahmen oder einen Einbauschacht in das Gehäuse versenkbar ist. Im Einbaurahmen oder im Einbauschacht ist auf der rechten und linken Seite, welche an der linken und rechten Seite des Gehäuses anliegen, je eine Rastkante vorgesehen, hinter der nach vollständigem Einschub des Gehäuses die Rastfedern einrasten und dadurch das Gehäuse im Einbaurahmen oder Einbauschacht arretieren.

Auf der rechten und linken Seite des Gehäuses ist je ein drehbarer Riegel mit einer schrägen Führung angeordnet, gegen die ein Anschlag der unter Spannung stehenden Rastfeder drückt. Durch Drehen der Riegel in die eine Drehrichtung - vorzugsweise nach links - sind die Rastfedern in das Gehäuse versenkbar, während durch Drehen der Riegel in die andere Drehrichtung - vorzugsweise nach rechts - die Rastfedern freigebbar sind. Bei in das Gehäuse versenkten Rastfedern ist das Gehäuse entriegelt, während es bei aus dem Gehäuse ragenden Rastfedern verriegelt ist.

Auf der Oberseite jeden Riegels ist außermittig ein Zapfen angeordnet, dessen Stellung anzeigt, ob sich die Rastfedern im Gehäuse versenkt in der entriegelten Stellung oder aus dem Gehäuse ragend in der verriegelten Stellung befinden.

Im Einbaurahmen oder im Einbauschacht ist rechts und links je ein Führungsschlitz für die Zapfen der Riegel derart angeordnet, daß sich das Gehäuse nur in der verriegelten Stellung - also bei aus dem Gehäuse ragenden Rastfedern - in den Einbaurahmen oder in den Einbauschacht schieben läßt. Beim Einschieben des Gehäuses in den Einbaurahmen oder in den Einbauschacht werden die Rastfedern in das Gehäuse gedrückt und rasten nach erfolgtem Einschub hinter den Rastkanten ein, so daß das Gehäuse im Einbaurahmen oder Einbauschacht arretiert ist.

Zur Entnahme des Gehäuses aus dem Einbaurahmen oder Einbauschacht werden die Rastfedern durch Drehen der Riegel nach links in die entriegelte Stellung gebracht, in welcher sie im Gehäuse versenkt sind. Das Gehäuse läßt sich nun soweit aus dem Einbaurahmen oder Einbauschacht ziehen, bis die Zapfen der Riegel an den Einbaurahmen oder an den Einbauschacht stoßen. Durch weiteres Herausziehen des Gehäuses werden die Riegel nun soweit gedreht, bis die Zapfen in die für sie vorgesehenen Führungsschlitze gleiten, wobei gleichzeitig die Rastfedern freigegeben werden, aber noch vom Einbaurahmen oder vom Einbauschacht in das Gehäuse versenkt sind, jedoch nach Herausziehen aus dem Einbaurahmen oder dem Einbauschacht aus dem Gehäuse in die verriegelte Stellung schnappen.

Ein wesentlicher Vorteil der Erfindung ist nun darin zu sehen, daß sich die Rastfedern nach Herausnahme des Gehäuses aus dem Einbaurahmen oder dem Einbauschacht automatisch in der verriegelten Stellung befinden, so daß das Gehäuse beim Wiedereinstecken in den Einbaurahmen oder den Einbauschacht automatisch verriegelt ist. Es ist daher keine manuelle Verriegelung des Gehäuses nach dem Einschieben in den Einbaurahmen oder den Einbauschacht mehr erforderlich.

Bei dem erfindungsgemäßen Gehäuse kann es nach Einbau in den Einbaurahmen oder den Einbauschacht nicht mehr vorkommen, daß die Verriegelung vergessen wird und das Gehäuse bei einem Unfall aus dem Schacht geschleudert werden kann. Bei jedem vollständig in den Einbaurahmen oder Einbauschacht geschobenen Gehäuse ist seine Verriegelung automatisch sichergestellt.

Die Erfindung wird anhand der Figuren näher beschrieben und erläutert.

In der Zeichnung zeigen:
- Figur 1: eine Teilansicht der rechten Seite eines erfindungsgemäßen Ausführungsbeispieles des Gehäuses mit einem Riegel und einer Rastfeder in der verriegelten Stellung vor Einschieben in einen Einbauschacht,
- Figur 2: eine Teilansicht der rechten Seite des Ausführungsbeispieles des Gehäuses aus Figur 1, eingeschoben:in den Einbauschacht in der entriegelten Stellung,
- Figur 3: eine Teilansicht der linken Seite des erfindungsgemäßen Ausführungsbeispieles des Gehäuses mit einem Riegel und einer Rastfeder in perspektivischer Darstellung,
- Figur 4: einen Teilschnitt durch die linke und rechte Seite des Gehäuses, die Riegel und die Rastfedern in der entriegelten Stellung,
- Figur 5: eine Seitenansicht eines Ausführungsbeispiels eines rechten Riegels,
- Figur 6: das Ausführungsbeispiel des rechten Riegels in perspektivischer Darstellung,
- Figur 7: ein Ausführungsbeispiel eines linken Riegels von unten,
- Figur 8: eine Seitenansicht des linken Riegels,
- Figur 9: eine weitere Seitenansicht des linken Riegels,
- Figur 10: ein Ausführungsbeispiel einer Rastfeder in perspektivischer Darstellung und
- Figur 11: eine Teilansicht der rechten Seite des Gehäuses ohne Riegel und Rastfeder in perspektivischer Darstellung.

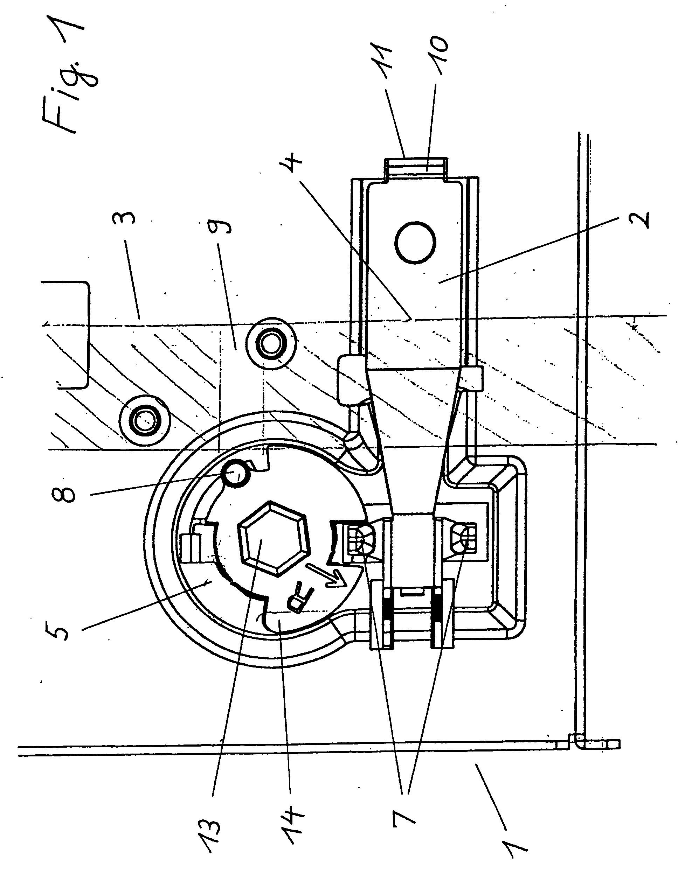

Figur 1 zeigt eine Teilansicht der rechten Seite eines Ausführungsbeispiels des Gehäuses 1 mit einem Riegel 5 und einer Rastfeder 2 in der verriegelten Stellung vor dem Einschieben in einen Einbauschacht 3.

Außermittig ist auf der Oberseite 14 des Riegels 5 ein Zapfen 8 angeordnet, der in der hier dargestellten verriegelten Stellung in den Führungsschlitz 9 des Einbauschachtes 3 schiebbar ist.

Am hinteren Ende der Rastfeder 2 ist eine Zunge 10 vorgesehen, welche in einem Schlitz 11 des Gehäuses 1 steckt. Am vorderen Ende der Rastfeder 2 ist rechts und links je ein Anschlag 7 angeordnet. Der eine der beiden Anschläge 7 liegt bei Linksdrehung des Riegels 5 auf einer nicht sichtbaren schrägen Führung 6 auf. Außerdem sind am vorderen Ende der Rastfeder 2 zwei nach vorne gerichtete Rastarme 16 zum Einrasten hinter der Rastkante 4 des Einbauschachtes 3 vorgesehen.

Nach Einschieben des Gehäuses 1 in den Einbauschacht 3 rasten die Rastarme 16 der Rastfeder 2 an der Rastkante 4 des Einbauschachtes 3 ein, wodurch das Gehäuse 1 im Einbauschacht 3 arretiert wird.

Um alle Teile des Gehäuses 1, des Riegels 5 und der Rastfeder 2 sehen zu können, ist der Einbauschacht 3 durchsichtig gezeichnet.

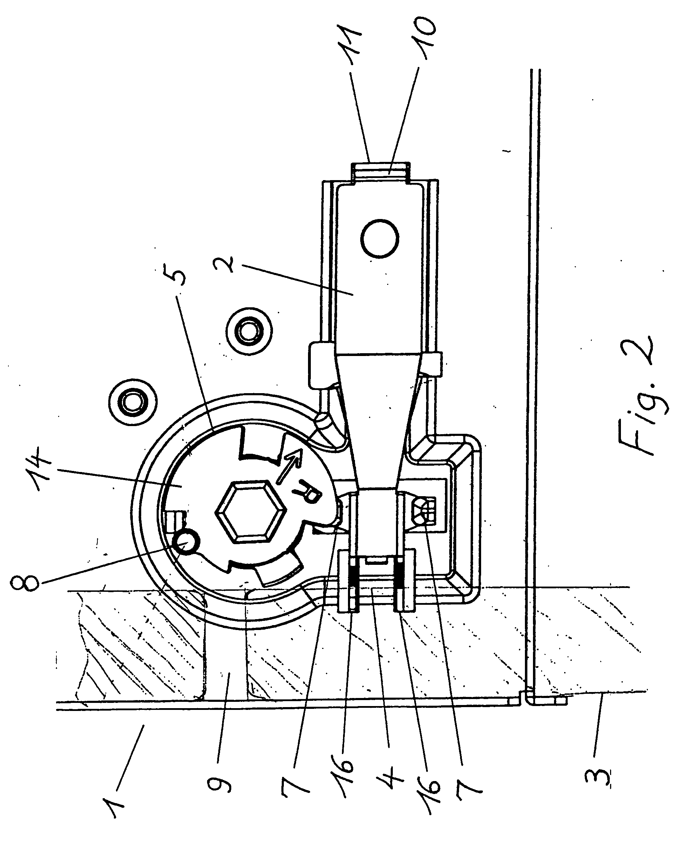

Figur 2 zeigt eine Teilansicht der rechten Seite des Ausführungsbeispieles aus Figur 1 mit dem Riegel 5 und der Rastfeder 2 eingeschoben in den Einbauschacht 3.

Zum Lösen der hinter der Rastkante 4 eingerasteten Rastfeder 2 ist der Riegel 5 mit dem Zapfen 8 nach links in die entriegelte Stellung gedreht, in welcher die Rastfeder 2 im Gehäuse 1 versenkt ist.

Weil in der entriegelten Stellung die Rastfedern 2 im Gehäuse 1 versenkt sind, läßt sich das Gehäuse 1 aus dem Einbaurahmen 3 ziehen, bis der Zapfen 8 am Einbaurahmen 3 anstößt. Durch weiteres Herausziehen des Gehäuses 1 aus dem Einbauschacht 3 wird der Riegel 5 wegen des am Einbauschacht anstoßenden Zapfens 8 so weit nach rechts gedreht, bis der Zapfen 8 in den für ihn vorgesehenen Führungsschlitz 9 des Einbauschachtes 3 gleitet. Gleichzeitig wird die Rastfeder 2 wieder freigegeben, die jedoch nicht mehr einrasten kann, weil sie sich bereits in der Öffnung des Einbauschachtes 3 befindet.

Wenn das Gehäuse 1 weiter aus dem Einbauschacht gezogen wird, befindet es sich in der in der Figur 1 gezeigten Stellung. Die Rastfeder 2 ragt aus dem Gehäuse 1 und ist daher in der verriegelten Stellung. Durch Wiedereinschieben des Gehäuses 1 in den Einbauschacht 3 wird das Gehäuse 1 automatisch nach vollständigem Einschub verriegelt, weil die Rastfeder 2 wieder hinter der Rastkante 4 des Einbauschachtes 3 einrastet.

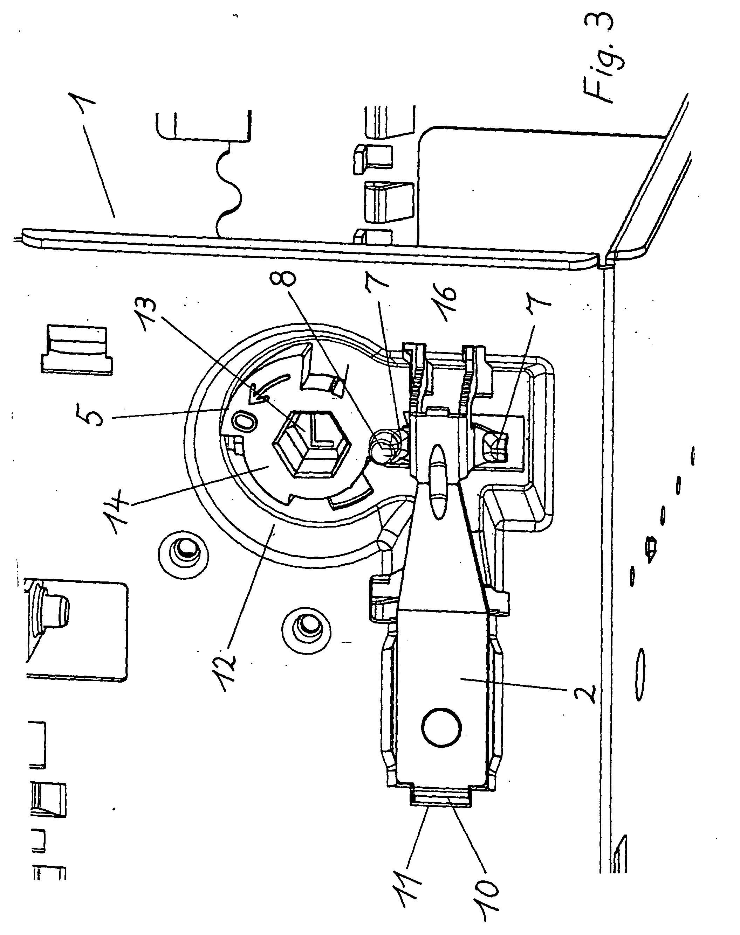

In der Figur 3 ist eine Teilansicht der linken Seite des Gehäuses 1 mit einem Riegel 5 und einer Rastfeder 2 in perspektivischer Darstellung gezeigt.

Der Riegel 5 ist in einer Öffnung 12 des Gehäuses 1 drehbar gelagert. Konzentrisch zur Drehachse des Riegels 5 ist ein Sechskantloch 13 zum Eingriff eines Inbusschlüssels vorgesehen. Auf der Oberseite 14 des Riegels 5 ist außermittig der Zapfen 8 angeordnet.

Die Zunge 11 am hinteren Ende der Rastfeder 2 steckt im Schlitz 10 des Gehäuses 1. Am vorderen Ende der Rastfeder 2 sind sich gegenüberliegend die beiden Anschläge 7 angeordnet.

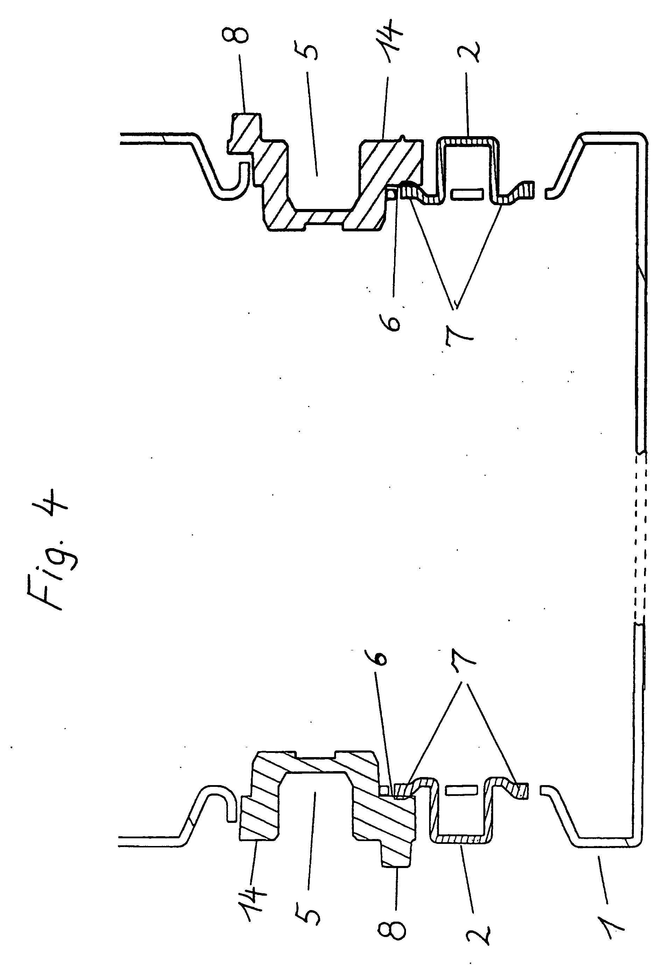

Figur 4 zeigt einen Teilschnitt durch die linke und rechte Seite des Gehäuses 1, den linken Riegel 5 und die linke Rastfeder 2 in der entriegelten Stellung. Der eine Anschlag 7 der Rastfeder 2 liegt an der schrägen Führung 6 des Riegels 5 auf. In der in Figur 4 dargestellten entriegelten Stellung hält die schräge Führung 6 die Rastfeder 2 im Gehäuse 1 versenkt.

In Figur 5 ist eine Seitenansicht des rechten Riegels abgebildet.

Auf der Oberseite 14 des rechten Riegels 5 ist außermittig der Zapfen 8 angeordnet. Am Mantel des scheibenförmigen Riegels 5 ist die schräge Führung 6, die sich auf ungefähr ein Viertelkreissegment erstreckt, für den Anschlag 7 der Rastfeder 2 eingearbeitet. Die Unterseite des linken Riegels 5 ist mit 15 bezeichnet.

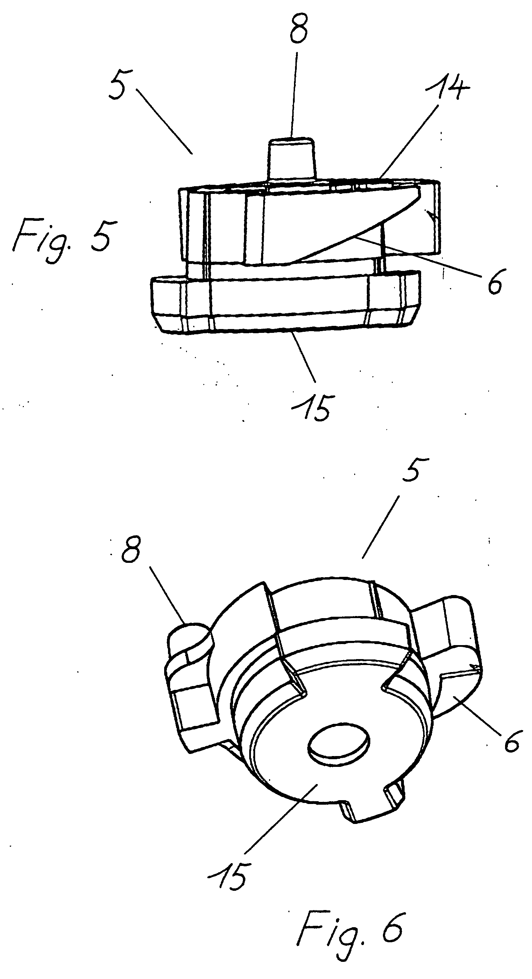

In Figur 6 ist der rechte Riegel 5 mit dem Zapfen 8, der schrägen Führung 6 und der Unterseite 15 von unten in perspektivischer Darstellung zu sehen.

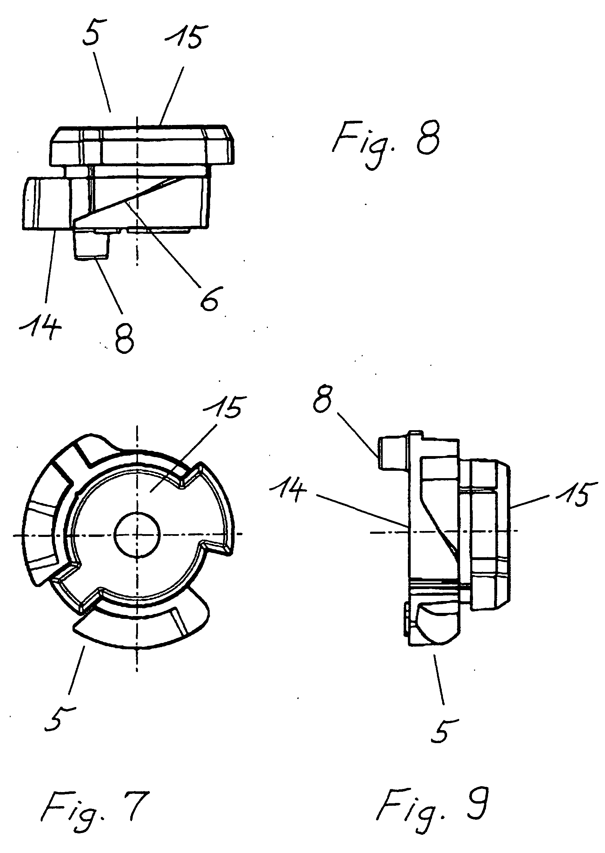

In Figur 7 ist ein linker Riegel mit seiner Unterseite 15 von unten zu sehen.

Figur 8 zeigt den linken Riegel mit dem Zapfen 8 auf seiner Oberseite 14, der Unterseite 15 und der schrägen Führung 6 am Mantel des scheibenförmigen Riegels 5.

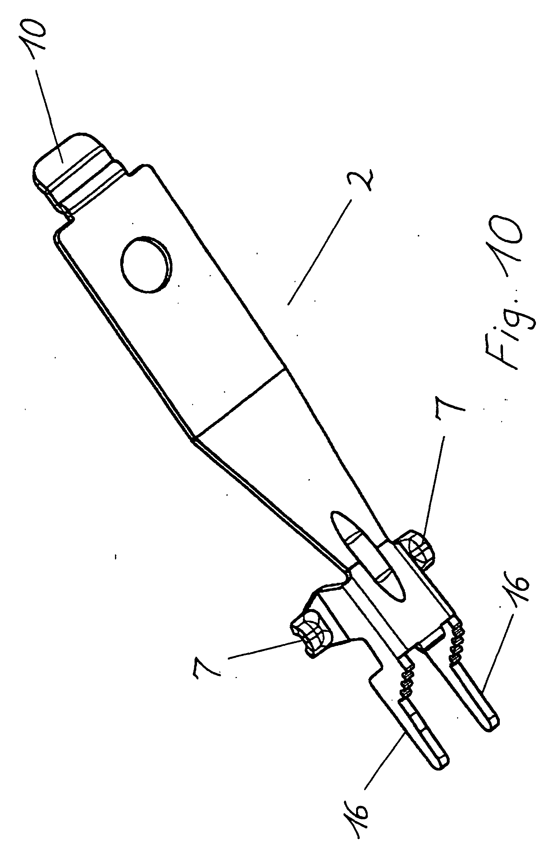

Figur 9 zeigt eine weitere Seitenansicht des linken Riegels mit der Oberseite 14, dem Zapfen 8 und der Unterseite 15.

In Figur 10 ist eine Rastfeder 2 perspektivisch dargestellt. Am hinteren Ende der Rastfeder 2 ist die Zunge 10 vorgesehen, welche in den Schlitz 11 im Gehäuse gesteckt wird. Am vorderen Ende der Rastfeder 2 sind sich gegenüberliegend die beiden Anschläge 7 angeordnet. Außerdem weist das vordere Ende der Rastfeder 2 zwei nach vorne gerichtete Rastarme 16 auf.

Die Rastfedern 2 sind symmetrisch aufgebaut, so daß die linke und die rechte Rastfeder gleich ausgeführt sind.

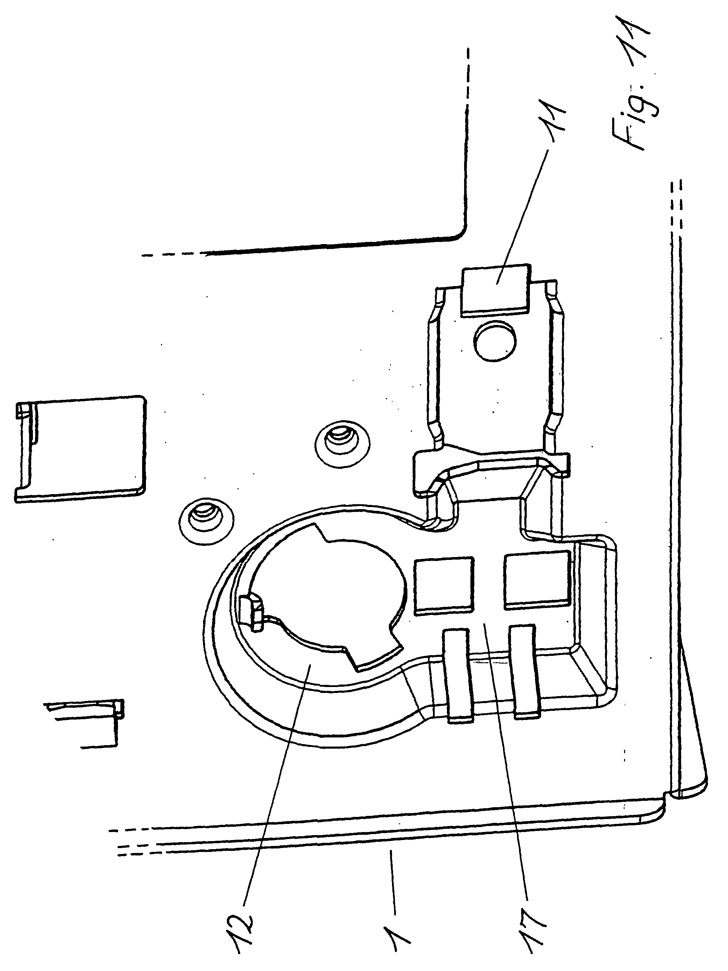

In Figur 11 ist eine Teilansicht der rechten Seite des Gehäuses ohne Riegel und Rastfeder perspektivisch dargestellt.

In die rechte Seite des Gehäuses 1 ist ebenso wie in die linke Seite eine Öffnung 12 zur drehbaren Lagerung der Riegel 5 eingearbeitet. Außerdem ist wie bereits erwähnt der Schlitz 11 vorgesehen, in welchen die Zunge 10 der Rastfeder 2 gesteckt wird. Desweiteren ist eine Aussparung 17 zum Versenken der Rastfeder 2 vorgesehen.

Das erfindungsgemäße Gehäuse ist besonders für ein Autoradio geeignet. Wie bereits erwähnt, liegt ein wesentlicher Vorteil des erfindungsgemäßen Gehäuses darin, daß es sich nur in der verriegelten Stellung in den Einbauschacht einbauen läßt, so daß es nach vollständigem Einschub in den Einbauschacht automatisch verriegelt und arretiert ist. Es sind keinerlei zusätzliche Handgriffe zur Verriegelung des Gehäuses erforderlich. Somit ist sichergestellt, daß ein in den Einbauschacht geschobenes erfindungsgemäßes Gehäuse stets verriegelt ist.

### Bezugszeichenliste

- 1: Gehäuse
- 2: Rastfeder
- 3: Einbauschacht
- 4: Rastkante
- 5: Riegel
- 6: schräge Führung
- 7: Anschlag
- 8: Zapfen
- 9: Führungsschlitz
- 10: Zunge
- 11: Schlitz
- 12: Öffnung
- 13: Sechskantloch
- 14: Oberseite des Riegels
- 15: Unterseite des Riegels
- 16: Rastarm
- 17: Aussparung

## Patentansprüche

1. Gehäuse (1), an dessen rechter und linker Seite je eine aus dem Gehäuse (1) ragende Rastfeder (2) angeordnet ist, die zum Einschieben des Gehäuses (1) in einen Einbaurähmen oder in einen Einbauschacht (3) in das Gehäuse versenkbar sind und hinter einer Rastkante (4) des Einbaurahmens oder des Einbauschachtes (3) einrasten, !
**dadurch gekennzeichnet, daß** auf der rechten und linken Seite des Gehäuses (1) je ein drehbarer Riegel (5) mit einer schrägen Führung (6) angeordnet ist, gegen die ein Anschlag (7) der unter Spannung stehenden Rastfeder (2) drückt, daß die Rastfedern (2) durch Drehen der Riegel (5) in die eine Drehrichtug in das Gehäuse (1) versenkbar sind, während sie durch Drehen der Riegel (5) in die andere Drehrichtung freigebbar sind, daß aus jedem Riegel (5) ein außermittig angeordneter Zapfen (8) ragt, für den im Einbaurahmen oder im Einbauschacht (3) ein Führungsschlitz (9) derart angeordnet ist, daß sich das Gehäuse (1) nur in der verriegelten Stellung bei aus dem Gehäuse (1) ragendenden Rastfedern (2) in den Einbaurahmen oder in den Einbauschacht (3) schieben läßt, wobei die Rastfedern (2) beim Einschieben vom Einbaurahmen oder vom Einbauschacht (3) in das Gehäuse (1) gedrückt werden und nach erfolgtem Einschub hinter den Rastkanten (4) einrasten, daß zur Entnahme des Gehäuses (1) aus dem Einbaurahmen oder aus dem Einbauschacht (3) die Rastfedern (2) durch Drehen der Riegel (5) in die entriegelte Stellung gebracht werden, in welcher sie im Gehäuse (1) versenkt sind, daß beim Herausziehen des Gehäuses (1) aus dem Einbaurahmen oder dem Einbauschacht (3) die Zapfen (8) der Riegel (5) an den Einbaurahmen oder an den Einbauschacht (3) stoßen, wodurch die Riegel so weit gedreht werden, bis die Zapfen (8) in die für sie vorgesehenen Führungsschlitze (9) gleiten, wobei gleichzeitig die Rastfedern (2) freigegeben werden, die daher sofort nach Herausziehen aus dem Einbaurahmen oder aus dem Einbauschacht (3) aus dem Gehäuse (1) in die verriegelte Stellung schnappen.

2. Gehäuse nach Anspruch 1,
**dadurch gekennzeichnet, daß** am Befestigungsende der Rastfeder (2) eine Zunge (10) vorgesehen ist, die in einen Schlitz (11) des Gehäuses (1) steckbar ist.

3. Gehäuse nach Anspruch 1 oder 2,
**dadurch gekennzeichnet, daß** am aus dem Gehäuse (1) ragenden Ende der Rastfeder (2) rechts und links je ein Anschlag (7) vorgesehen ist, der auf der schrägen Führung (6) des Riegels (5) gleitet.

4. Gehäuse nach Anspruch 1, 2 oder 3,
**dadurch gekennzeichnet, daß** aus dem aus dem Gehäuse (1) ragenden Ende der Rastfeder (2) zwei Rastarme (16) in Längsrichtung der Rastfeder (2) ragen.

5. Gehäuse nach Anspruch 1, 2, 3 oder 4,
**dadurch gekennzeichnet, daß** die Riegel (5) scheibenförmig ausgeführt sind.

6. Gehäuse nach Anspruch 5,
**dadurch gekennzeichnet, daß** jeder der beiden Riegel (5) in eine Öffnung (12) des Gehäuses (1) steckbar ist, in welchem er drehbar gelagert ist.

7. Gehäuse nach Anspruch 5 oder 6,
**dadurch gekennzeichnet, daß** die schräge Führung (6) für den Anschlag (7) einer Rastfeder (2) am Mantel des Riegels (5) eingearbeitet ist.

8. Gehäuse nach Anspruch 7,
**dadurch gekennzeichnet, daß** sich die schräge Führung (6) auf etwa 1/4 Kreissegment erstreckt.

9. Gehäuse nach einem der vorangehenden Ansprüche,
**dadurch gekennzeichnet, daß** die Rastfedern (2) durch Rechtsdrehen der Riegel (5) verriegelbar sind, wobei sie aus dem Gehäuse (1) ragen, während sie durch Linksdrehen der Riegel (5) entriegelbar sind, wobei sie im Gehäuse (1) versenkt sind.

10. Gehäuse nach einem der vorangehenden Ansprüche 1 - 9,
**dadurch gekennzeichnet, daß** die drehbaren Riegel (5) eine Vorrichtung (13) zum Eingreifen eines üblichen Werkzeugs aufweisen.

11. Gehäuse nach Anspruch 10,
**dadurch gekennzeichnet, daß** die drehbaren Riegel (5) einen Schlitz für den Eingriff eines Schraubendrehers, eine Ausnehmung für den Eingriff eines Torques-Schraubendrehers, einen Sechskantkopf für den Eingriff eines Schraubenschlüssels oder ein Sechskantloch (13) für den Eingriff eines Inbusschlüssels aufweisen.

12. Gehäuse nach einem der vorangehenden Ansprüche,
**dadurch gekennzeichnet, daß** es sich bei dem Gehäuse (1) um das Gehäuse eines Autoradios handelt.

## Claims

1. Housing (1), on the right and left sides of which is disposed in each case a detent spring (2) which projects out of the housing (1), which springs are retractable into the housing (1) for insertion of the housing (1) into a mounting frame or into a mounting slot (3) and which engages behind a detent edge (4) of the mounting frame or of the mounting slot (3), **characterised in that** a rotatable catch (5) with an oblique guide (6) is disposed in each case on the right and left sides of the housing (1), a stop (7) of the detent spring (2) under tension pressing against the said catch, that the detent springs (2) can be retracted into the housing (1) by rotation of the catch (5) in one direction, whilst they can be released by rotation of the catch (5) in the other direction, that an eccentrically disposed pin (8) projects out of each catch (5), a guide channel (9) for the said pin being disposed in the mounting frame or in the mounting slot (3) in such a way that the housing (1) can be pushed into the mounting frame or into the mounting slot (3) only in the locked position with the detent springs (2) projecting out of the housing (1), whereby as the mounting frame or the mounting slot (3) is inserted the detent springs (2) are pressed into the housing (1) and engage behind the detent edges (4) after insertion is accomplished, that for removal of the housing (1) from the mounting frame or the mounting slot (3) the detent springs (2) are brought into the unlocked position by rotation of the catch (5), a position in which they are retracted in the housing (1), that when the housing (1) is pulled out from the mounting frame or the mounting slot (3) the pins (8) of the catches (5) butt against the mounting frame or against the mounting slot (3) as a result of which the catches are rotated until the pins (8) slide into the guide slots (9) provided for them, wherein the detent springs (2) are simultaneously released and therefore snap out of the housing into the locked position immediately after removal from the mounting frame or from the mounting slot (3).

2. Housing as claimed in Claim 1, **characterised in that** on the fixing end of the detent springs (2) there is provided a tab (10) which can be inserted into a slot (11) in the housing (1).

3. Housing as claimed in Claim 1 or 2, **characterised in that** a stop (7) which slides on the oblique guide (6) of the catch (5) is provided on the right and left sides in each case on the end of the detent springs (2) projecting from the housing (1).

4. Housing as claimed in Claim 1, 2 or 3, **characterised in that** two detent arms (16) project in the longitudinal direction of the detent springs (2) out of the end of the detent springs (2) projecting out of the housing (1).

5. Housing as claimed in Claim 1, 2, 3 or 4, **characterised in that** the catch (5) is of disc-shaped construction.

6. Housing as claimed in Claim 5, **characterised in that** each of the two catches (5) can be inserted into an opening (12) in the housing (1) in which it is rotatably mounted.

7. Housing as claimed in Claim 5 or 6, **characterised in that** the oblique guide (6) for the stop (7) of a detent spring (2) is made in the casing of the catch (5).

8. Housing as claimed in Claim 7, **characterised in that** the oblique guide (6) extends over approximately 1/4 of a segment of a circle.

9. Housing as claimed in any one of the preceding claims, **characterised in that** the detent springs (2) can be locked by rotation of the catches (5) to the right whereby they project out of the housing (1), whilst by rotation of the catches (5) to the left they can be unlocked whereby they are retracted in the housing (1).

10. Housing as claimed in any one of the preceding Claims 1 - 9, **characterised in that** the rotatable catches (5) have a device (13) for engaging a conventional tool.

11. Housing as claimed in Claim 10, **characterised in that** the rotatable catches (5) have a slot for the engagement of a screwdriver, a recess for the engagement of a torque screwdriver, a hexagonal head for the engagement of a wrench, or a hexagonal hole (13) for the engagement of an Allen key.

12. Housing as claimed in any one of the preceding claims, **characterised in that** the housing (1) is the housing of a car radio.

## Revendications

1. Boîtier (1), sur le côté droit et gauche respectivement duquel est disposé un ressort d'encliquetage (2) faisant saillie hors du boîtier (1), ces ressorts étant escamotables dans le boîtier pour l'insertion du boîtier (1) dans un bâti de montage ou dans une cavité de montage (3) et s'encliquetant derrière une arête d'encliquetage (4) du bâti de montage ou de la cavité de montage (3),
**caractérisé en ce que** sur le côté droit et gauche respectivement du boîtier (1) est disposé un verrou mobile en rotation (5) à guidage oblique (6), une butée (7) du ressort d'encliquetage (2) comprimé appuyant sur ces verrous;
**en ce que** les ressorts d'encliquetage (2) sont escamotables dans le boîtier (1) par une rotation des verrous (5) dans un sens de rotation, alors qu'ils peuvent être libérés par une rotation des verrous (5) dans l'autre sens de rotation;
**en ce qu'**un tourillon (8) disposé de manière excentrée fait saillie hors de chaque verrou (5), tourillon pour lequel une fente de guidage (9) est ménagée dans le bâti de montage ou dans la cavité de montage (3) de telle sorte que le boîtier (1) ne peut être inséré dans le bâti de montage ou dans la cavité de montage (3) qu'en position de verrouillage avec les ressorts d'encliquetage (2) faisant saillie hors du boîtier (1), les ressorts encliquetables (2) étant poussés dans le boîtier (1) par le bâti de montage ou par la cavité de montage (3) lors de l'insertion et s'encliquetant derrière les arêtes d'encliquetage (4) une fois l'insertion est accomplie ;
**en ce que**, pour le retrait du boîtier (1) hors du bâti de montage ou de la cavité de montage (3), les ressorts d'encliquetage (2) sont mis en position de déverrouillage par rotation des verrous (5), position dans laquelle ils sont escamotés dans le boîtier (1);
**en ce que**, lors du retrait du boîtier (1) hors du bâti de montage ou de la cavité de montage (3), les tourillons (8) des verrous (5) butent contre le bâti de montage ou la cavité de montage (3), ce qui fait tourner les verrous jusqu'à ce que les tourillons (8) glissent dans les fentes de guidage (9) prévues pour eux, les ressorts d'encliquetage (2) étant simultanément libérés et s'encliquetant alors dans la position de verrouillage aussitôt après le retrait du boîtier hors du bâti de montage ou de la cavité de montage (3).

2. Boîtier selon la revendication 1,
**caractérisé en ce qu'**une languette (10) est prévue à l'extrémité de fixation du ressort d'encliquetage (2), ladite languette pouvant être introduite dans une fente (11) du boîtier (1).

3. Boîtier selon la revendication 1 ou 2,
**caractérisé en ce qu'**une butée (7) est prévue à droite et à gauche respectivement sur chaque extrémité des ressorts encliquetables (2) faisant saillie hors du boîtier (1), ladite butée glissant sur le guidage oblique (6) du verrou (5).

4. Boîtier selon la revendication 1, 2 ou 3,
**caractérisé en ce que** deux bras encliquetables (16) font saillie de l'extrémité du ressort encliquetable (2) faisant saillie hors du boîtier (1) en sens longitudinal du ressort encliquetable (2).

5. Boîtier selon la revendication 1, 2, 3 ou 4,
**caractérisé en ce que** les verrous (5) sont réalisés en forme de disque.

6. Boîtier selon la revendication 5,
**caractérisé en ce que** chacun des deux verrous (5) peut être introduit dans une ouverture (12) du boîtier (1), dans laquelle il est logé mobile en rotation.

7. Boîtier selon la revendication 5 ou 6,
**caractérisé en ce que** le guidage oblique (6) de la butée (7) d'un ressort d'encliquetage (2) est aménagé sur l'enveloppe du verrou (5).

8. Boîtier selon la revendication 7,
**caractérisé en ce que** le guidage oblique (6) s'étend sur environ ¼ d'un segment de cercle.

9. Boîtier selon l'une des revendications précédentes,
**caractérisé en ce que** les ressorts d'encliquetage (2) peuvent être verrouillés par rotation à droite des verrous (5) en position de saillie hors du boîtier (1), alors qu'ils peuvent être déverrouillés par rotation à gauche des verrous (5) en position escamoté dans le boîtier (1).

10. Boîtier selon l'une des revendications précédentes 1 à 9,
**caractérisé en ce que** les verrous mobiles en rotation (5) comportent un dispositif (13) pour l'engagement d'un outil usuel.

11. Boîtier selon la revendication 10,
**caractérisé en ce que** les verrous mobiles en rotation (5) comportent une fente pour l'engagement d'un tournevis, un creux pour l'engagement d'un tournevis dynamométrique, une tête à six pans pour l'engagement d'une clé à écrous, ou un trou à six pans (13) pour l'engagement d'une clé pour vis à six pans creux.

12. Boîtier selon l'une des revendications précédentes,
**caractérisé en ce que** le boîtier (1) est le boîtier d'une autoradio.
